# FASCICULE DE BREVET EUROPEEN

(11) **EP 2 600 262 B1**
(45) Date de publication et mention de la délivrance du brevet: **06.03.2019**
(21) Numéro de dépôt: 12194865.7
(22) Date de dépôt: 29.11.2012
(51) Int. Cl.: G06F 17/30

(54) **Procédé d'affichage de pages par un navigateur d'un équipement tel qu'un boîtier décodeur de fournisseur d'accès Internet**
Verfahren zur Anzeige von Seiten durch einen Browser in einem Gerät für den Internet - Zugang
Method of rendering web pages by a browser of internet access boxes

(30) Priorité: 02.12.2011 FR 1161072
(43) Date de publication de la demande: 05.06.2013
(73) Titulaire: Freebox, 75008 Paris (FR)
(72) Inventeur: Vasseur, Clément, 75008 PARIS (FR); Gournet, Olivier, 75008 PARIS (FR)
(74) Mandataire: Dupuis-Latour, Dominique

(56) Documents cités:
- US-A1- 2003 043 191
- US-A1- 2009 100 361

## Description

L'invention concerne un procédé d'affichage de pages de type HTML par un équipement doté d'un système d'exploitation fermé, cet équipement étant relié à un serveur distant par une liaison réseau.

Il peut s'agir en particulier d'un équipement formé par un boitier décodeur de fournisseur d'accès Internet. Un tel boitier est relié d'une part au serveur distant du fournisseur d'accès par une liaison réseau de type IP (ADSL ou fibre optique), et il est d'autre part couplé à un téléviseur permettant d'afficher diverses informations, notamment des pages HTML générées localement par un navigateur intégré au système de l'équipement. Un exemple d'équipement de ce type est le boitier distribué par l'opérateur *Free*, Paris, France sous la dénomination *Freebox Player ou Freebox HD.* Ce boitier intègre décodeur, serveur domestique, etc. Il assure notamment le décodage des différents signaux du flux video, qui pourront être visionnés sur le téléviseur sur lequel il est branché. Il est par ailleurs couplé à un boitier réseau disposé à proximité de la prise téléphonique d'abonné de l'utilisateur, qui assure les fonctions d'interfaçage ADSL avec la ligne téléphonique, de modem de téléphonie sur IP, de routeur sans fil Wi-Fi, etc.

Cet équipement intègre en outre un navigateur permettant l'affichage sur l'écran du téléviseur de diverses informations, formatées dans un langage de programmation de type HTML, XML, etc. Ce navigateur permet d'interroger le serveur distant (par envoi d'une requête), de télécharger des pages comportant des balises dans le langage de programmation retenu, de formater le contenu de ces pages et d'afficher sur l'écran du téléviseur le contenu résultant.

Cette page combine en fait deux types d'informations, à savoir :
- des informations reçues par le navigateur en provenance du serveur distant (le serveur du fournisseur d'accès Internet, pour lequel l'équipement fait office de client) ; et
- des informations provenant d'une source interne à l'équipement, c'est-à-dire des informations reçues par le navigateur en provenance du client (l'équipement).

Ces dernières informations sont des informations dynamiques, c'est-à-dire non figées.

Il s'agit typiquement de données de statut de l'équipement, telles que par exemple : version du micrologiciel (*firmware*) du système de l'équipement, adresse IP de l'équipement, indicateurs de diagnostic, configuration d'un réseau agencé en aval de l'équipement, état d'un disque dur intégré ou couplé à l'équipement, horodatage de programmation d'enregistrements, etc.

Compte tenu des ressources restreintes de l'équipement, notamment en termes de capacité du micrologiciel, il est parfois souhaitable de limiter les fonctionnalités du navigateur à un navigateur très simplifié ne supportant que du code statique. En outre, certains navigateurs simplifiés n'intègrent pas de moteur de langage de script, par exemple un moteur *JavaScript,* trop volumineux. C'est notamment le cas des navigateurs simplifiés ne supportant que du code HTML statique. Dans toutes ces hypothèses, l'affichage d'informations dynamiques (au sens indiqué plus haut) n'est pas possible. En effet, le serveur n'a pas connaissance du statut courant de l'équipement qui lui adresse la requête. Il ne peut donc pas intégrer les informations dynamiques dans la page qu'il lui enverra en retour.

US 2009/0100361 A1 divulgue un procédé pour enrichir applications installées sur un boîtier, mais ne donne pas de solution du problème mentionné si dessus.

Une première solution à ce problème consiste à adresser au serveur, en même temps que la requête, les informations de statut à intégrer à la page à afficher.

Cela implique toutefois un surcout de trafic sur le réseau, en particulier dans le sens montant (client vers serveur) où le débit est faible dans le cas des liaisons asymétriques (ADSL). De plus, cette solution implique de charger le serveur de fonctions de gestion des équipements qui lui sont connectés, souvent au nombre de plusieurs millions, ce qui n'est pas souhaitable du point de vue de l'économie générale des ressources informatiques mises en oeuvre par le fournisseur d'accès.

Une deuxième solution consiste à ajouter au navigateur un support de langage de script, par exemple en y intégrant un moteur *JavaScript.*

Un exemple de technique d'adaptation d'un navigateur pour permettre à celui-ci de présenter des pages web comportant à la fois des informations statiques et des informations dynamiques est décrit par exemple dans le WO 99/08182 A1.

Le navigateur HTML supportant un langage de script, il devient alors possible d'incorporer dans la page HTML retournée par le serveur des scripts qui seront exécutés par le navigateur après le téléchargement de cette page, notamment pour obtenir en interne des informations de statut de l'équipement et changer le contenu de la page en y intégrant ces informations.

Cette solution impose toutefois de modifier le navigateur, ce qui n'est pas toujours possible ou souhaitable, soit parce que l'on ne dispose pas du code source, soit parce qu'une telle modification serait couteuse en termes de développement, soit encore parce que l'on souhaite conserver une version de navigateur très simplifiée et très compacte. En effet, les boitiers décodeurs des fournisseurs d'accès Internet intègrent généralement un navigateur non standard, spécialement développé par le concepteur de cet équipement de manière à optimiser la gestion des ressources informatiques de celui-ci.

Le US2009/0100361 A1 décrit un boitier de type *set-top box* comportant un logiciel permettant l'affichage sur un écran de télévision de *widgets* dynamiques ajoutés sous diverses formes à l'image télédiffusée présente sur cet écran. Un *renderer* combine des informations issues de différentes sources de manière à constituer le *widget* à afficher sur l'écran. L'invention vise la situation très particulière où l'on souhaite, pour les raisons exposées plus haut, n'utiliser qu'un navigateur très simplifié, non susceptible d'exécuter un script, mais qui doit néanmoins pouvoir afficher du contenu dynamique. Cette contrainte très sévère n'est pas envisagée par les solutions proposées par les WO 99/08182 A1 et US2009/0100361 A1 précités, qui ne donnent aucune indication à l'homme du métier pour résoudre le problème particulier de l'invention.

L'invention a pour objet de pallier les limitations des techniques connues exposées ci-dessus, en proposant une autre solution, qui permette de résoudre ce problème en générant au niveau de l'équipement client du contenu dynamique sur la page, sans modifier le navigateur et sans communiquer au serveur distant les informations dynamiques issues de l'équipement client.

Essentiellement, la solution de l'invention consiste à introduire au sein de l'équipement un serveur intermédiaire, local, de type HTTP, qui supportera un langage de script capable de récupérer les informations dynamiques à afficher et de générer du contenu pour permettre au navigateur d'afficher une page intégrant ces informations.

Côté serveur, pour l'affichage de ces informations, le code de navigation sera remplacé par des fichiers contenant le code source qui sera exécuté côté client par le serveur intermédiaire.

Le client (le navigateur) au lieu de faire une requête réseau sur le serveur distant, fera une requête sur le serveur local, lequel fera à son tour une requête sur le serveur distant. Le code téléchargé sur le serveur suite à cette requête sera utilisé pour créer du contenu par exécution du langage de script intégré à ce serveur intermédiaire.

En d'autres termes, il s'agit d'ajouter un intermédiaire au sein de l'équipement (c'est-à-dire côté client, pour le serveur distant), sans modifier le navigateur (par exemple le client HTML).

L'utilisation d'un serveur intermédiaire (par exemple *proxy* HTTP) est certes connue, mais généralement sur des serveurs distants et non localement au sein du client. En outre et surtout, l'originalité de la présente invention repose sur le fait que ce serveur intermédiaire est utilisé côté client afin de générer le contenu des pages à transmettre au navigateur pour affichage, en fonction d'informations dynamiques issues du client. Cette manière de procéder est particulièrement avantageuse pour les navigateurs qui ne sont pas modifiables ou que l'on ne souhaite pas modifier, pour les raisons exposées plus haut.

Un autre avantage de la présente invention est qu'elle permet d'utiliser n'importe quel langage de script, ou n'importe quel moyen de générer du contenu, sans être limité par le ou les langages fournis par un navigateur donné. Cette caractéristique est particulièrement intéressante pour les anciens systèmes, ou dans le cas d'intégration de systèmes non modifiables, ou qui ne supportent pas de langage de script.

Plus précisément, l'invention propose un procédé d'affichage de pages par un équipement client doté d'un système fermé, relié à un serveur distant, ce système fermé intégrant un navigateur. Les pages à afficher combinent i) du code de navigation statique reçu du serveur distant et ii) du code de navigation dynamique représentatif de données de statut de l'équipement, délivrées par une source interne à cet équipement.

De façon caractéristique de l'invention, le navigateur est un navigateur dépourvu de langage de script, qui ne supporte que du code de navigation statique, et les données de statut ne sont pas adressées au serveur distant. L'équipement client est doté d'un serveur local. Par ailleurs, l'équipement client est doté d'un serveur local intermédiaire *proxy* muni d'un langage de script et interfacé avec le serveur distant, le navigateur et la source interne. Le procédé consiste à exécuter les étapes suivantes :
1°) émission par le navigateur d'une requête de page, adressée au serveur local intermédiaire ;
2°) interrogation du serveur distant par le serveur local ;
3°) obtention en retour par le serveur local d'un fichier contenant du code de navigation statique et du code source exécutable ;
4°) interrogation de la source interne par le serveur local ;
5°) obtention en retour par le serveur local desdites données de statut ;
6°) exécution par le serveur local d'un script de génération du code de navigation dynamique à partir du code source exécutable reçu à l'étape 3°) et des données de statut ;
7°) transmission du serveur local au navigateur de la combinaison du code de navigation statique obtenu à l'étape 3°) et du code de navigation dynamique généré à l'étape 6°) ; et
8°) par le navigateur, formatage en une page du code de navigation reçu du serveur local, pour affichage sur un écran de visualisation couplé à l'équipement.

Dans une forme de mise en oeuvre préférentielle, la requête adressée par le navigateur au serveur local à l'étape 1°) contient i) l'adresse IP du serveur distant et ii) le chemin d'accès au fichier à obtenir à l'étape 3°), et à l'étape 2°) le serveur local interroge le serveur distant avec cette adresse et ce chemin d'accès.

Par ailleurs, le script de génération exécuté à l'étape 6°) est avantageusement codé en langage *JavaScript*, le serveur local contenant un environnement d'exécution de ce langage.

On va maintenant décrire un exemple de mise en oeuvre du dispositif de l'invention, en référence aux dessins annexés où les mêmes références numériques désignent d'une figure à l'autre des éléments identiques ou fonctionnellement semblables.

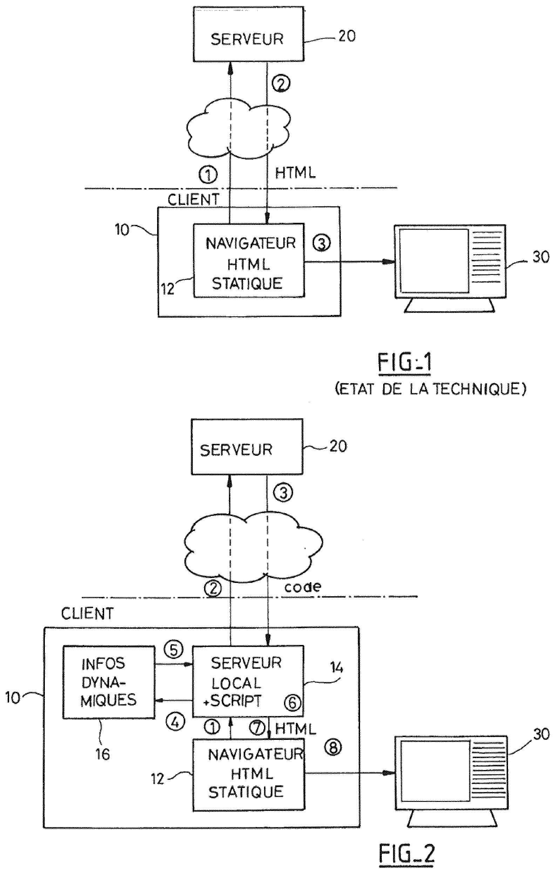

La Figure 1 est une représentation schématique des différents blocs fonctionnels et éléments matériels mis en oeuvre dans l'état de la technique. La Figure 2 est une représentation schématique semblable à celle de la Figure 1, dans le cas du procédé de l'invention.

Sur les figures, la référence 10 désigne de façon générale un équipement client, tel qu'un boitier décodeur de fournisseur d'accès Internet, par exemple un boitier de type *Freebox Player* distribué par l'opérateur *Free*, Paris, France.

Cet équipement est relié à un serveur distant 20 par une liaison IP, par exemple une liaison ADSL ou fibre optique. L'équipement 10 est par ailleurs relié à un téléviseur 30 pour l'affichage de différentes informations sous forme de pages HTML générées par un navigateur HTML 12 incorporé à l'équipement 10.

Sur la Figure 1, on a illustré de façon schématique la manière de procéder conventionnelle, selon l'état de la technique.

Le navigateur HTML 12, qui est un navigateur statique, interroge le serveur 20 par envoi d'une requête (étape 1) de la forme :
*http:*//*A.B.C.D*/*...*//*fichier.html,*
où "*A.B.C.D*" est l'adresse IP du serveur distant et "..." représente le chemin d'accès du fichier "*fichier.html*" à télécharger.

Le fichier reçu du serveur (étape 2) contient du code HTML statique, qui est formaté par le navigateur 12 et transmis (étape 3) au téléviseur 30 pour affichage sous forme d'une page HTML.

La solution de l'invention consiste à modifier cette configuration, en conservant le navigateur HTML statique 12 et en introduisant dans l'équipement 12 un serveur HTTP intermédiaire local 14. Ce serveur local 14 est interfacé avec le navigateur 12 et avec le serveur distant 20 pour servir d'intermédiaire (*proxy*) entre ces deux éléments. Le serveur local 14 a également accès à une source 16 d'informations dynamiques, interne à l'équipement 10, permettant de récupérer des informations dynamiques représentatives de données de statut de cet équipement telles que, comme indiqué plus haut : version du micrologiciel du système de l'équipement, adresse IP de l'équipement, indicateurs de diagnostic, configuration d'un réseau agencé en aval de l'équipement, état d'un disque dur intégré ou couplé à l'équipement, horodatage de programmation d'enregistrements, etc.

Lorsque le système de l'équipement demande au navigateur 12 d'afficher une page HTML, celui-ci envoie (étape 1) une requête au serveur local 14 (au lieu de l'envoyer directement au serveur distant comme dans le cas de la Figure 1). Cette requête sera de la forme :
*http:*//*127.0.0.1*/*remote*/*A.B.C.D*/*...*/*fichier.html*

L'adresse IP "*127.0.0.1*" indique que la requête doit être appliquée localement, et le reste de la requête permet de spécifier l'adresse IP du serveur distant (*A.B.C.D*) ainsi que le chemin d'accès du fichier à télécharger. À partir de cette requête, le serveur local génère de son côté une autre requête, adressée au serveur distant 20 (étape 2), de la forme :
*http:*//*A.B.C.D*/*...*//*fichier.html*

À réception de cette requête, le serveur distant 30 retourne (étape 3) un fichier contenant des balises HTML pour du code HTML statique, ainsi qu'un code source exécutable qui permettra, côté client, la génération du contenu de la page.

À réception de ce fichier, le serveur local 14 interroge la source interne 16 (étape 4) pour récupérer (étape 5) les informations dynamiques représentatives des données de statut de l'équipement, à intégrer à la page à afficher.

Le script du code source reçu du serveur 20 est exécuté (étape 6) par le serveur local 14, qui génère ainsi du code HTML transmis au navigateur 12 (étape 7).

Le navigateur 12 peut alors formater le code HTML reçu du serveur local et transmettre celui-ci au téléviseur pour affichage sur l'écran de visualisation (étape 8).

## Revendications

1. Un procédé d'affichage de pages par un équipement client (10) doté d'un système fermé, relié à un serveur distant (20), ce système fermé intégrant un navigateur (12),
les pages à afficher combinant i) du code de navigation statique reçu du serveur distant et ii) du code de navigation dynamique représentatif de données de statut de l'équipement, délivrées par une source (16) interne à cet équipement,
ce procédé étant **caractérisé en ce que** :
- le navigateur est un navigateur dépourvu de langage de script, ne supportant que du code de navigation statique ;
- les données de statut ne sont pas adressées au serveur distant ;
- l'équipement client (10) est doté d'un serveur local intermédiaire *proxy* (14) muni d'un langage de script et interfacé avec le serveur distant (20), le navigateur (12) et la source interne (16),
- et **en ce qu'**il comprend les étapes suivantes :
1°) émission par le navigateur d'une requête de page, adressée au serveur local intermédiaire ;
2°) interrogation du serveur distant par le serveur local ;
3°) obtention en retour par le serveur local d'un fichier contenant du code de navigation statique et du code source exécutable ;
4°) interrogation de la source interne par le serveur local ;
5°) obtention en retour par le serveur local desdites données de statut ;
6°) exécution par le serveur local d'un script de génération du code de navigation dynamique à partir du code source exécutable reçu à l'étape 3°) et des données de statut ;
7°) transmission du serveur local au navigateur de la combinaison du code de navigation statique obtenu à l'étape 3°) et du code de navigation dynamique généré à l'étape 6°) ; et
8°) par le navigateur, formatage en une page du code de navigation reçu du serveur local, pour affichage sur un écran de visualisation (30) couplé à l'équipement.

2. Le procédé de la revendication 1, dans lequel les données de statut sont des données du groupe formé par : version du micrologiciel du système de l'équipement, adresse IP de l'équipement, indicateurs de diagnostic, configuration d'un réseau agencé en aval de l'équipement, état d'un disque dur intégré ou couplé à l'équipement, horodatage de programmation d'enregistrements.

3. Le procédé de la revendication 1, dans lequel l'équipement est un boitier décodeur de fournisseur d'accès Internet, apte à être couplé à un téléviseur pour l'affichage de la page.

4. Le procédé de la revendication 1, dans lequel la requête adressée par le navigateur au serveur local à l'étape 1°) contient i) l'adresse IP du serveur distant et ii) le chemin d'accès au fichier à obtenir à l'étape 3°), et dans lequel à l'étape 2°) le serveur local interroge le serveur distant avec cette adresse et ce chemin d'accès.

5. Le procédé de la revendication 1, dans lequel le script de génération exécuté à l'étape 6°) est codé en langage *JavaScript,* et dans lequel le serveur local contient un environnement d'exécution de *JavaScript.*

## Patentansprüche

1. Verfahren zum Anzeigen von Seiten durch eine Client-Vorrichtung (10), die mit einem geschlossenen System versehen ist, das mit einem Fern-Server (10) verbunden ist, wobei dieses geschlossene System einen Browser (12) integriert,
wobei die anzuzeigenden Seiten i) statischen Browser-Code, der vom Fern-Server (10) erhalten wird, und ii) dynamischen Browser-Code, der für Statusdaten der Vorrichtung repräsentativ ist, die durch eine dieser Vorrichtung interne Quelle (16) bereitgestellt werden, kombiniert,
wobei das Verfahren **dadurch gekennzeichnet ist, dass**
- der Browser ein Browser ohne Scriptsprache ist, der nur statischen Browser-Code unterstützt;
- die Statusdaten nur an den Fern-Server adressiert sind;
- die Client-Vorrichtung (10) mit einem lokalen Zwischen-Proxy-Server (14) versehen ist, der mit einer Scriptsprache versehen ist und per Schnittstelle mit dem Fern-Server (20), dem Browser (12) und der internen Quelle (16) verbunden ist,
- und **dadurch gekennzeichnet ist, dass** es die folgenden Schritte umfasst:
1. Senden, durch den Browser, einer Seitenanfrage, die an den lokalen Zwischen-Proxy-Server (14) adressiert ist;
2. Abfragen des Fern-Servers durch den lokalen Server;
3. als Antwort Erhalten einer Datei durch den lokalen Server, die statischen Browser-Code und ausführbaren Quellcode enthält;
4. Abfragen der internen Quelle durch den lokalen Server;
5. als Antwort Erhalten der Statusdaten durch den lokalen Server;
6. Ausführen eines Scripts zur Erzeugung des dynamischen Browser-Codes ausgehend von dem in Schritt 3 erhaltenen ausführbaren Quellcode und den Statusdateien durch den lokalen Server;
7. Übertragen des in Schritt 3 erhaltenen statischen Browser-Codes und des in Schritt 6 erzeugten dynamischen Browser-Codes vom lokalen Server an den Browser; und
8. Formatieren des vom lokalen Server erhaltenen Browser-Codes durch den Browser in eine Seite zur Anzeige auf einem Anzeigebildschirm (30), der mit der Vorrichtung verbunden ist.

2. Verfahren nach Anspruch 1, bei dem die Statusdaten Daten der Gruppe sind, gebildet aus: Version der Firmware des Systems der Vorrichtung, IP-Adresse der Vorrichtung, Diagnoseindikatoren, Konfiguration eines stromabwärts der Vorrichtung angeordneten Netzes, Zustand einer in die Vorrichtung integrierten oder mit ihr verbundenen Festplatte, Zeitstempel der Programmierung von Aufzeichnungen.

3. Verfahren nach Anspruch 1, bei dem die Vorrichtung ein Decoder-Gehäuse für einen Internetdienstanbieter ist, das zur Anzeige der Seite mit einem Fernseher verbindbar ist.

4. Verfahren nach Anspruch 1, bei dem die in Schritt i) vom Browser an den lokalen Server adressierte Anfrage i) die IP-Adresse des Fern-Servers und ii) den Zugangspfad zu der in Schritt 3 zu erhaltenden Datei enthält und bei dem in Schritt 2) der lokale Server den Fern-Server mit dieser Adresse und diesem Zugangspfad abfragt.

5. Verfahren nach Anspruch 1, bei dem das in Schritt 6 ausgeführte Erzeugungs-Script in der Sprache JavaScript codiert ist und bei dem der lokale Server eine Umgebung zur Ausführung von JavaScript enthält.

## Claims

1. A method for displaying pages by a client device (10) provided with a closed system, connected to a remote server (20), this closed system integrating a browser (12),
the pages to be displayed combining i) static browsing code received from the remote server and ii) dynamic browsing code representative of device status data, delivered by a source (16) internal to this device,
this method being **characterized in that**:
- the browser is a browser without script language, that supports only static browsing code;
- the status data are not addressed to the remote server;
- the client device (10) is provided with a *proxy* intermediate local server (14) provided with a script language and interfaced with the remote server (20), the browser (12) and the internal source (16),
- and **in that** it comprises the following steps:
1) emission by the browser of a page request, addressed to the intermediate local server;
2) query of the remote server by the local server;
3) obtaining in return by the local server of a file containing static browsing code and executable source code;
4) query of the internal source by the local server;
5) obtaining in return by the local server of said status data;
6) execution by the local server of a script for generating dynamic browsing code based on the executable source code received at step 3) and on the status data;
7) transmission by the local server to the browser of the combination of the static browsing code obtained at step 3) and of the dynamic browsing code generated at step 6); and
8) by the browser, formatting of the browsing code received from the local server into a page, to be displayed on a visualisation screen coupled to the device.

2. The method of claim 1, wherein the status data are data of the group formed by: device system firmware version, device IP address, diagnosis indicators, configuration of a network upstream from the device, state of a hard disk integrated or coupled to the device, recording schedule timestamp.

3. The method of claim 1, wherein the device is an Internet access provider set-top box, adapted to be coupled to a television set for displaying the page.

4. The method of claim 1, wherein the request addressed by the browser to the local server at step 1) contains i) the IP address of the remote server and ii) the access pathway to the file to be obtained at step 3), and wherein, at step 2), the local server queries the remote server with this address and this access pathway.

5. The method of claim 1, wherein the generation script executed at step 6) is advantageously coded into *JavaScript* language, the local server containing a *JavaScript* execution environment.
